# EUROPÄISCHE PATENTSCHRIFT

(11) **EP 3 387 891 B1**
(45) Veröffentlichungstag und Bekanntmachung des Hinweises auf die Patenterteilung: **07.06.2023**
(21) Anmeldenummer: 18166274.3
(22) Anmeldetag: 09.04.2018
(51) Int. Cl.: A01B 59/042

(54) **ZUGVORRICHTUNG**
TRACTION DEVICE
DISPOSITIF DE TRACTION

(30) Priorität: 12.04.2017 DE 202017001959 U
(43) Veröffentlichungstag der Anmeldung: 17.10.2018
(73) Patentinhaber: Wittmann, Roland, 80339 München (DE)
(72) Erfinder: Wittmann, Roland, 80339 München (DE)
(74) Vertreter: Sedlacek, Anton

(56) Entgegenhaltungen:
- WO-A1-2014/072297
- DE-C1- 10 153 823
- US-A1- 2004 060 715
- US-A1- 2005 012 301

## Beschreibung

### Technisches Gebiet

Die vorliegende Anmeldung bezieht sich auf eine Zugvorrichtung umfassend ein Zugfahrzeug, insbesondere einen Schlepper, einen Traktor, etc., sowie ein an die Zugvorrichtung anhängbares Anhängegerät. Bei dem Anhängegerät kann es sich beispielsweise um einen einachsigen oder einen mehrachsigen Anhänger mit einer Deichsel handeln.

Derartige Zugvorrichtungen werden bevorzugt in der Land- und Forstwirtschaft zur Bewirtschaftung von Feldern, beispielsweise zum Säen, Düngen, Ernten, etc. eingesetzt.

### Stand der Technik

Es ist bekannt zur Bewirtschaftung von Feldern und dgl.

Anhängegeräte an ein Zugfahrzeug anzuhängen, wie in der DE 10153823 offenbart. Im Einsatz auf dem Feld ist es vorteilhaft eine Deichsellänge des Anhängegeräts so zu wählen, dass ein nahezu spurgetreuer Nachlauf gewährleistet wird. In anderen Worten sollen die Räder des Anhängegeräts den Rädern des Zugfahrzeugs nahezu exakt folgen, um Einwirkungen auf den Boden des Feldes bzw. des Waldes so gering wie möglich zu halten und um die Fläche des Feldes voll auszunutzen.

Die Deichsellänge sowie der Einhängepunkt an dem Zugfahrzeug beeinflussen die Nachlaufeigenschaften des Anhängers sowie die zulässige Höchstgeschwindigkeit des Zugfahrzeugs.

In dem Fall, in dem die Deichsel des Anhängegeräts im Bereich eines höhenverstellbaren Unterlenkers eines DreipunktKrafthebers des Zugfahrzeugs eingehängt bzw. befestigt ist, ist, da der Drehpunkt in Fahrtrichtung nach hinten verlagert ist, die spurgetreue Nachlaufeigenschaft in der Regel gut.

Allerdings ist die Höchstgeschwindigkeit des Zugfahrzeugs vermindert, in der Regel auf 25km/h begrenzt, um ein Schlingern bzw. Kippen des Anhängegeräts zu vermeiden.

In dem Fall, in dem die Deichsel in ein Zugmaul des Schleppers eingehängt wird, ist die Höchstgeschwindigkeit größer; für gewöhnlich zumindest 40km/h. Die spurgetreue Nachlaufeigenschaft ist jedoch vermindert.

Um die spurgetreue Nachlaufeigenschaft im Feldeinsatz zur Verfügung zu haben und um gleichzeitig auf der Straße, wo die spurgetreue Nachlaufeigenschaft weniger relevant ist, mit größeren Geschwindigkeiten fahren zu können, sind Deichseln, insbesondere Unterlenkerdeichseln, mit zwei Drehpunkten bekannt. In Abhängigkeit von dem Einsatzzweck wird einer der beiden Drehpunkte fixiert und der andere freigegeben. Beispielsweise wird im Feldeinsatz der näher an dem Zugfahrzeug angeordnete Drehpunkt fixiert und für eine Fahrt auf der Straße (mit höherer Geschwindigkeit) wird der andere Drehpunkt fixiert. Beide Drehpunkte dürfen nicht gleichzeitig fixiert sein. Das Wechseln der fixierten und gelösten Drehpunkte erfordert Zeit und Geschick, wodurch zusätzliche Kosten entstehen.

Weiterhin ist es bekannt bei einer Unterlenkerdeichsel einen Hydraulikzylinder einzusetzen, um den in Fahrrichtung vorne angeordneten Drehpunkt zu fixieren (Feldeinsatz). Der hintere Drehpunkt wird mechanisch gelöst. Bei der Fahrt auf der Straße kann der Hydraulikzylinder ausgehängt werden, um den vorderen Drehpunkt zu lösen. Der hintere Drehpunkt wird mechanisch fixiert. Der Hydraulikzylinder kann bei der Fahrt am Hang dazu eingesetzt werden, um das Anhängegerät in die Spur des Zugfahrzeugs zu lenken. Diese Lösung ist als Deichsellenkung bekannt.

Eine Lösung mit Hydraulikzylinder ist teuer in der Anschaffung und erfordert einen hohen Instandhaltungsaufwand. Weiterhin wird bei dieser Lösung ein Hydraulikschaltkreis durch den Hydraulikzylinder in Anspruch genommen.

### Darstellung der Erfindung

Es besteht somit der Wunsch nach einer technisch einfachen Lösung, um ein Fixieren und Lösen des in Fahrtrichtung weiter vorne angeordneten Drehpunkts mit einfachen Mitteln zu erwirken.

Diese Aufgabe wird mit einer Zugvorrichtung gemäß dem unabhängigen Anspruch gelöst. Vorteilhafte Weiterbildungen finden sich in den abhängigen Ansprüchen.

Die Erfindung basiert auf dem Grundgedanken den höhenverstellbaren Unterlenker geschickt einzusetzen, um die Drehbarkeit der Deichsel zu beeinflussen.

Eine erfindungsgemäße Zugvorrichtung umfasst ein Zugfahrzeug, insbesondere einen Schlepper, sowie ein Anhängegerät, wobei das Zugfahrzeug eine Zugeinrichtung, insbesondere ein Zugmaul, in das eine Deichsel des Anhängegeräts um einen ersten Drehpunkt verschwenkbar, insbesondere drehbar, einhängbar ist, und einen an der Rückseite des Zugfahrzeugs angeordneten, bevorzugt höhenverstellbaren Unterlenker, umfasst, wobei der Unterlenker dazu eingerichtet ist, um bei an die Zugeinrichtung angehängter Deichsel eine zumindest temporäre Verriegelung zwischen der Deichsel, dem Unterlenker und einem in den Unterlenker eingehängten Koppelelement zu erwirken.

Unter einer erfindungsgemäßen Zugvorrichtung wird eine Kombination aus einem Zugfahrzeug und einem daran angehängten Anhängegerät verstanden. Das Zugfahrzeug kann als Schlepper, Traktor bzw. als landwirtschaftliche Zugmaschine ausgebildet sein. Das Zugfahrzeug umfasst gemäß der Erfindung eine Zugeinrichtung, die dazu ausgebildet ist das Anhängegerät zu ziehen. Bei dem Anhängegerät handelt es sich bevorzugt um einen zumindest einachsigen Anhänger. Der Anhänger kann Mittel zur Bewirtschaftung von Feldern, Wäldern und dgl. umfassen.

Der Anhänger ist gemäß der Erfindung mit einer Deichsel versehen. Die Deichsel ist dazu eingerichtet, um in die Zugeinrichtung, insbesondere das Zugmaul, des Zugfahrzeugs verschwenkbar eingehängt zu werden. Unter der Deichsel wird im Sinne der Erfindung eine Einrichtung verstanden, mit der ein Anhänger gezogen werden kann. Eine Deichsel kann auch als Zugstange bezeichnet werden. Unter einem verschwenkbaren Einhängen wird ein Einhängen verstanden, bei dem die Deichsel in eine Vielzahl Richtungen drehbar ist, um Wank-, Nick- und Gierbewegungen auszugleichen.

Bei dem an der in Fahrrichtung hinteren Seite des Zugfahrzeugs angeordneten, bevorzugt höhenverstellbaren Unterlenker handelt es sich mit Vorteil um eine hydraulische Vorrichtung an dem Zugfahrzeug, mit der es möglich ist Anbaugeräte (Arbeitsgeräte) mit Hilfe einer Fangöse anzukuppeln und anzuheben. Der Unterlenker ist bevorzugt als Teil eines Dreipunkt-Kraftgebers (Dreipunkthydraulik) ausgebildet.

Mit der erfindungsgemäßen Vorrichtung ist es besonders vorteilhaft möglich den anhebbaren bzw. höhenverstellbaren Unterlenker dazu zu verwenden, um eine temporäre Verriegelung zwischen dem Unterlenker, der Deichsel, und dem in dem Unterlenker eingehängten Koppelelement zu erwirken. Auf äquivalente Weise kann im Sinne der Erfindung die temporäre Verriegelung durch eine verschwenkbare, insbesondere bewegliche, Ausgestaltung des Koppelelements bewirkt werden. Durch hydraulisches Anheben kann das in den Unterlenker eingehängte Koppelelement dazu gebracht werden, mit einem Abschnitt der Deichsel bzw. einem Anbauteil der Deichsel in Eingriff zu treten. Dadurch kann auf sehr einfache Weise eine Verriegelung der in die Zugeinrichtung eingehängten Deichsel erwirkt werden.

Dabei kann vorteilhafterweise vorgesehen sein, dass das Anbauteil in Längsrichtung auf der Deichsel verschiebbar vorgesehen bzw. gleitbar daran angeordnet ist. Dies ist vorteilhaft um die Position an Traktoren unterschiedlicher Größe und Fabrikat anzupassen.

Nach einer weiteren Modifikation der Erfindung kann vorgesehen sein, dass die Deichsel in ihrer Länge teleskopierbar ist. Auch dies ist für Traktoren unterschiedlicher Größe und Fabrikat von Vorteil.

Gemäß einer Ausführungsform der Erfindung wird die temporäre Verriegelung durch eine Auf- und/oder Abwärtsbewegung des Unterlenkers und/oder des in dem Unterlenker eingehängten Koppelelements bewirkt. Bevorzugt wird die Verriegelung durch eine Aufwärtsbewegung des Unterlenkers und/oder des in dem Unterlenker eingehängten Koppelelements bewirkt. Auf diese Weise lässt sich eine technisch einfach umsetzbare und zuverlässige temporäre Verriegelung erwirken.

Gemäß einer weiteren besonders bevorzugten Ausführungsform erwirkt die temporäre Verriegelung eine Verriegelung des ersten Drehpunkts, insbesondere eine im Wesentlichen horizontale Verriegelung. In anderen Worten wird die Deichsel derart in dem ersten Drehpunkt (der Zugeinrichtung) verriegelt, dass die Deichsel in der horizontalen Richtung nicht mehr verdreht werden kann. Wank- und Nickbewegungen können auch während der temporären Verriegelung weiterhin ausgeglichen werden.

Weiterhin kann an der Deichsel eine Verriegelungseinrichtung vorgesehen sein, um einen in Vorwärtsfahrtrichtung rückwärtig angeordneten, zweiten Drehpunkt zu blockieren. Diese Verriegelungseinrichtung kann bevorzugt als eine mechanisch betätigbare Einrichtung ausgebildet sein, um auf einfache Weise mit Vorteil eine zuverlässige Verriegelung sicherzustellen. Die Verriegelungseinrichtung kann mechanisch, hydraulisch und/oder elektrisch betätigbar ausgebildet sein.

Gemäß einer weiteren besonders bevorzugten Ausführungsform wird die temporäre Verriegelung zwischen der Deichsel, dem Unterlenker und dem Koppelelement durch eine bevorzugt mechanisch lösbare Verriegelung zwischen der Deichsel und dem Koppelelement bewirkt. Auf diese Weise ist es besonders vorteilhaft möglich die Verriegelung zwischen der Deichsel und dem Koppelelement zuverlässig und einfach lösbar zu erwirken.

Weiterhin kann gemäß einer bevorzugten Ausführungsform das Koppelelement derart ausgebildet sein, dass eine Zapfwelle zwischen dem Anhängegerät und der Zugvorrichtung anordenbar ist. Dazu weisen das Koppelelement und/oder die Deichsel bevorzugt eine Öffnung in einem für die Zapfwelle vorgesehenen Bereich auf. Die Öffnung muss so dimensioniert sein, dass auch bei gelöster temporärer Verbindung, eine Kurvenfahrt möglich ist.

Gemäß einer besonders bevorzugten Ausführungsform ist die temporäre Verriegelung dazu eingerichtet um Nickbewegungen des Zugfahrzeugs auszugleichen. Dadurch ist es mit Vorteil möglich Nickbewegungen zwischen Zugfahrzeug und Anhängegerät geschickt aufzunehmen ohne die temporäre Verriegelung zu beeinflussen. Gemäß einer besonders bevorzugten Ausführungsform ist die temporäre Verriegelung dazu eingerichtet um Wankbewegungen des Zugfahrzeugs auszugleichen. Dazu kann die Befestigung eines Anbauteils an der Deichsel derart ausgebildet sein, um Wankbewegungen, bspw. über ein Gelenk, auszugleichen. Dadurch ist es mit Vorteil möglich Wankbewegungen zwischen Zugfahrzeug und Anhängegerät geschickt aufzunehmen ohne die temporäre Verriegelung zu beeinflussen.

Gemäß einer vorteilhaften Weiterbildung kann die temporäre Verriegelung zwischen der Deichsel, dem Unterlenker und dem Koppelelement derart mit der hydraulischen Verriegelungseinrichtung an dem zweiten Drehpunkt in Wirkbeziehung stehen, dass ein Verriegeln zwischen der Deichsel, dem Unterlenker und dem Koppelelement ein Lösen der Verriegelung des zweiten Drehpunkts und umgekehrt bewirkt. Mit einer derartigen Wirkbeziehung wird die Sicherheit der Zugvorrichtung wesentlich erhöht.

Gemäß einer bevorzugten Ausführungsform ist das Koppelelement so ausgebildet, dass es mit der Deichsel verbunden ist. Bevorzugt ist das Koppelement mit der Deichsel fest verbunden. Auf diese Weise ist es nicht erforderlich das Koppelelement als separates Bauteil auszugestalten. Ferner ist es nicht notwendig das Koppelement zunächst mittels der Fanghaken mit dem Unterlenker zu koppeln. Um die temporäre Verriegelung zu erwirken, kann das Koppelelement in Eingriff mit dem Unterlenker gebracht werden.

Gemäß einer bevorzugten Ausführungsform ist bei der temporären Verriegelung eine Stellung bzw. Ausrichtung der Deichsel in Fahrrichtung des Zugfahrzeugs veränderbar. Durch ein Verändern der Stellung der Deichsel kann mit Vorteil ein Nachsteuern bei einer Fahrt in Schräglage, bspw. an einem Hang bewirkt werden.

Ferner kann nach einer optionalen Modifikation der Erfindung vorgesehen sein, dass an den Enden des Koppelelements jeweils ein Fanghaken vorgesehen ist und zwischen den Fanghaken und dem Koppelelement eine Überlastsicherung vorgesehen ist, die vorzugsweise dazu ausgelegt ist, zu verhindern, dass durch die hydraulische Kraft der Unterlenker während des Koppelvorgangs eine Überlastung der Anhängevorrichtung und/oder eines Niederhalters an der Zugeinrichtung eintritt.

### Kurze Beschreibung der Zeichnungen

- Fig. 1: zeigt eine perspektivische Ansicht eines Ausschnitts einer Ausführungsform einer erfindungsgemäßen Zugvorrichtung, bei der ein Koppelelement nicht in eine Deichsel eingehängt ist,
- Fig. 2: zeigt eine perspektivische Ansicht eines Ausschnitts der Ausführungsform der erfindungsgemäßen Zugvorrichtung mit in die Deichsel eingehängtem Koppelelement,
- Fig. 3: zeigt eine schematische Darstellung eines Zugfahrzeuges mit eingehängtem Anhängegerät,
- Fig. 4: zeigt eine perspektivische Ansicht eines Ausschnitts einer weiteren Ausführungsform der erfindungsgemäßen Zugvorrichtung, bei der das Koppelelement nicht in die Deichsel eingehängt ist,
- Fig. 5: zeigt eine perspektivische Ansicht eines Ausschnitts einer weiteren Ausführungsform der erfindungsgemäßen Zugvorrichtung mit in die Deichsel eingehängtem Koppelelement, und
- Fig. 6: zeigt eine weitere schematische Darstellung eines Zugfahrzeuges mit eingehängtem Anhängegerät.

### Detaillierte Beschreibung der Ausführungsformen der Erfindung

Im Folgenden werden beispielhafte Ausführungsformen der erfindungsgemäßen Zugvorrichtung 10 unter Bezugnahme auf die Zeichnungen beschrieben.

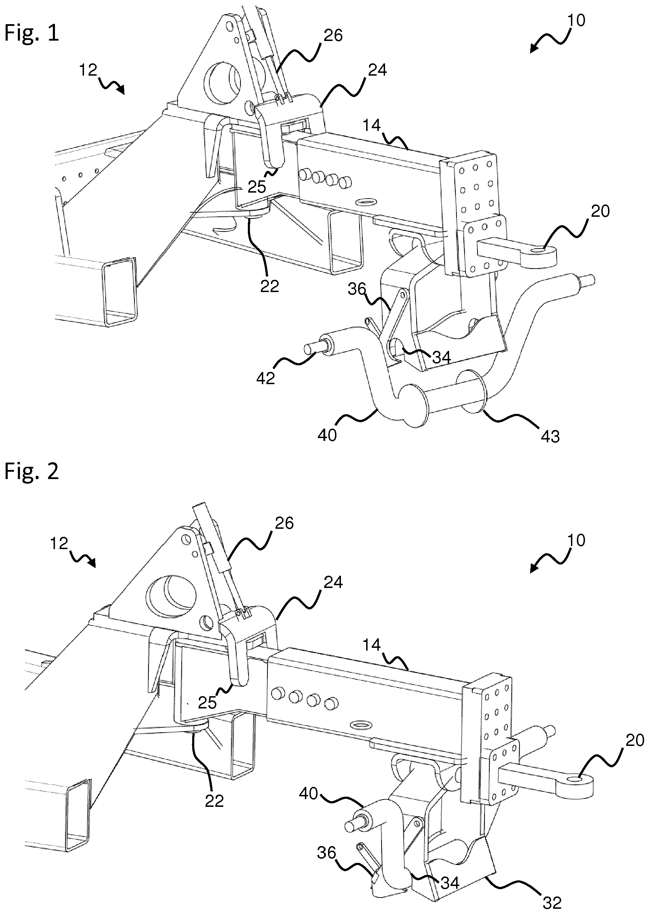

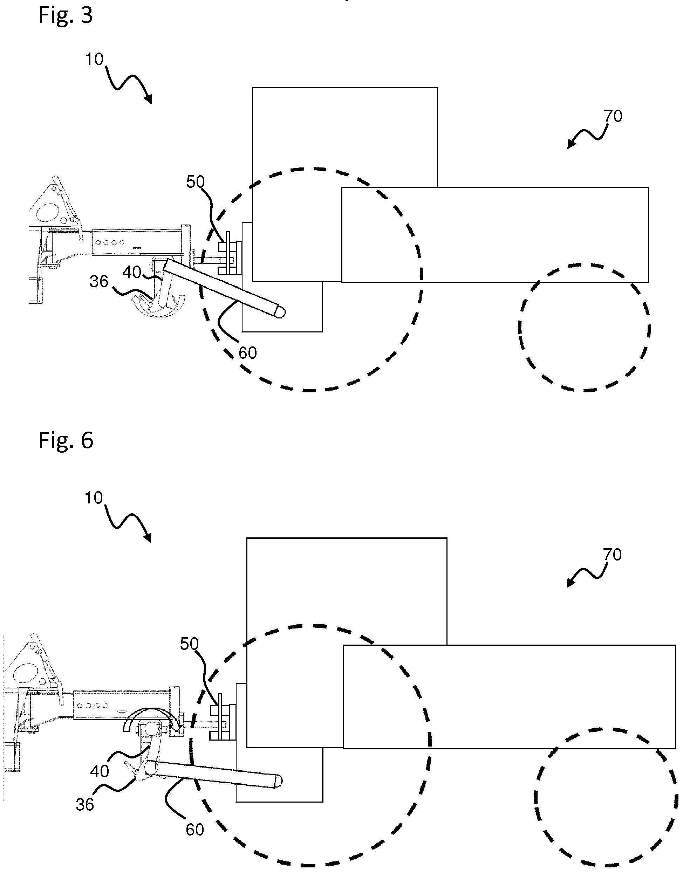

Fig. 1 zeigt eine erfindungsgemäße Zugvorrichtung 10 umfassend ein Anhängegerät 12 sowie ein Zugfahrzeug 70 (siehe Fig. 3). Bei dem Anhängegerät 12 kann es sich beispielsweise um einen einachsigen Anhänger oder einen mehrachsigen Anhänger handeln. Bei dem Zugfahrzeug 70 kann es sich beispielsweise um einen Schlepper, einen Traktor, etc. handeln.

Das Anhängegerät 12 ist mit einer bevorzugt längenverstellbaren Deichsel 14 versehen. Durch Verstellen der Länge der Deichsel können die Fahreigenschaften, insbesondere die Nachlaufeigenschaften, des Anhängegeräts beeinfluss werden. Die Deichsel 14 und das Anhängegerät 12 sind relativ zueinander um einen zweiten Drehpunkt 22 drehbar angeordnet. Der zweite Drehpunkt 22 ermöglicht eine im Wesentlichen horizontale Drehung der Deichsel 14 relativ zu dem Anhängegerät 12.

Mit Hilfe einer Verriegelungseinrichtung 24 kann der zweite Drehpunkt 22 blockiert werden. Fig. 1 zeigt die Verriegelungseinrichtung 24 in einem verriegelten Zustand, da ein Klauenelement 25 die Deichsel 14 blockiert. Durch die Betätigung eines Betätigungselements 26 kann die Verriegelungseinrichtung 24 angehoben werden und eine Drehung der Deichsel 14 um den zweiten Drehpunkt 22 relativ zu dem Anhängegerät 12 wird ermöglicht.

Das Betätigungselement 26 kann in dieser Ausführungsform als ein Hydraulikzylinder und/oder als mechanische Einrichtung ausgebildet sein. Alternative Formen der Verriegelung des zweiten Drehpunkts 22 statt oder zusätzlich zu der Verriegelungseinrichtung 24, beispielsweise durch einen in ein Loch eingeführten Bolzen oder dergleichen, sind möglich.

Die Deichsel 14 umfasst ferner in ihrem vorderen Bereich eine Öffnung 20, die an eine Zugeinrichtung 50, insbesondere ein Zugmaul, angehängt werden kann. Alternativ kann die Öffnung 20 so ausgeführt sein, dass sie mit einem K80-Kugelkopf, wie er aus dem landwirtschaftlichen Bereich bekannt ist, einer Zugzapfenkupplung (Pitonfix) oder einer Hitchkupplung in Eingriff treten kann. Die Zugeinrichtung 50 ist entsprechend beispielsweise als Kugelkopf auszuführen. Wenn die Öffnung 20 in die Zugeinrichtung 50, insbesondere das Zugmaul, eingehängt ist, kann das Anhängegerät 12 mit dem Zugfahrzeug 70 gezogen werden.

Die Öffnung 20 der Deichsel 14 wirkt als ein erster Drehpunkt 20, um welchen die Deichsel 14 relativ zum Zugfahrzeug 70 rotierbar bzw. verschwenkbar ist.

Im in Bezug auf das Zugfahrzeug 70 vorderen Bereich der Deichsel 14 ist ein Anbauteil 32 vorgesehen. Im Sinne der Erfindung ist das Anbauteil 32 als ein Teil der Deichsel 14 zu verstehen. Das Anbauteil 32 weist im Inneren eine Öffnung auf, die derart dimensioniert ist, dass durch sie eine Zapfwelle des Anhängegeräts 12 geführt werden kann. Das Anbauteil 32 über ein Gelenk derart an der Deichsel 14 befestigt, um Wankbewegungen auszugleichen.

Das Anbauteil 32 weist im unteren Bereich eine in etwa kreisrunde Ausnehmung 34 auf. Die Ausnehmung 34 ist so ausgebildet, das ein Koppelelement 40 in die Ausnehmung 34 einrücken kann. Fig. 2 zeigt das Koppelelement 40 in Eingriff mit der Ausnehmung 34, wobei ein drehbar angeordnetes Verriegelungselement 36 ein versehentliches Ausrücken des Koppelelements 40 aus der Ausnehmung 34 verhindert. Fig. 1 zeigt das Verriegelungselement 36 nicht in Eingriff mit dem Koppelelement 40 stehend.

Das Anbauteil 32 kann relativ zu der Deichsel 14 in Längsrichtung der Deichsel 14 entlang eines Gelenks und/oder einer Drehachse verschwenkbar angeordnet sein. Durch die verschwenkbare Anordnung können Wankbewegungen und/oder Nickbewegungen des Anhängegeräts 12 und der Zugvorrichtung 70 ausgeglichen werden. Diese Wank- und/oder Nickbewegungen entstehen vor allem bei einseitiger Hindernisüberfahrt des Anhängegeräts 12.

Das Verriegelungselement 36 kann auf verschiedene Arten die temporäre Verriegelung lösen, beispielsweise kann das Verriegelungselement 36 mit einer Leine von einem Führerhaus des Zugfahrzeugs 70 betätigt werden. Alternativ kann das Verriegelungselement 36 mit einem Elektromotor oder einem Hydraulikzylinder betätigt werden.

Das Verriegelungselement 36 ist so ausgebildet, dass ein versehentliches Entriegeln verhindert wird.

Das Koppelelement 40 ist in dem in Fig. 1 und Fig. 2 gezeigten Ausführungsbeispiel in etwa U-förmig ausgebildet. An den Enden des Koppelelements 40 ist jeweils ein Fanghaken 42 vorgesehen. Der Fanghaken 42 ist derart ausgeführt, dass eine Fangöse (nicht gezeigt) des Unterlenkers 50 damit in Eingriff gebracht werden kann. Das Koppelelement 40 weist im Wesentlichen schräg angeordnete, scheibenartige Einrückhilfen 43 auf.

Um die temporäre Verriegelung zwischen dem Unterlenker, dem Koppelelement 40 und der Deichsel 14 herzustellen, wird die Fangöse des Unterlenkers in Eingriff mit dem Fanghaken 42 des Koppelelements 40 gebracht. Weiterhin wird die Öffnung 20 der Deichsel 14 verschwenkbar in die Zugeinrichtung 50 eingehängt. Anschließend wird der Unterlenker 60 gemeinsam mit dem Koppelelement 40 soweit angehoben bis das Koppelelement 40 in die Ausnehmung 34 einrückt und das Verriegelungselement 36 verriegelt. Das Anheben des Unterlenkers 60 kann hydraulisch mit dem Dreipunkt-Kraftheber des Zugfahrzeugs erfolgen. Alternativ kann der Unterlenker 60 durch eine mechanische Vorrichtung an der Zugvorrichtung angehoben und abgesenkt werden. Die Einrückhilfen 43 erleichtern das Einrücken des Koppelelements 40 in die Ausnehmung 34 und geben durch die schräge Anordnung zusätzliche Steifheit. Durch das Einrücken des Koppelements 40 in die Ausnehmung 34 wird eine temporäre Verriegelung des ersten Drehpunkts 20 erwirkt.

Um Nickbewegungen während der Fahrt von dem Anhängegerät 12 und dem Zugfahrzeug 70 zu erleichtern, ist es vorteilhaft den Unterlenker 60 nach dem Anheben und Verriegeln des Koppelelements 40 in dem Anbauteil 32 hydraulisch zu entlasten. Dazu kann beispielsweise ein Steuergerät für den Unterlenker 60 auf Senkposition gestellt werden.

Umgekehrt wird, um die Verriegelung zwischen dem Koppelelement 40 und der Ausnehmung 34 des Anbauteils 32 zu lösen, das Verriegelungselement 36 angehoben und anschließend der Unterlenker gemeinsam mit dem Koppelelement 40 abgesenkt.

Mit der erfindungsgemäßen Vorrichtung ist es mit Hilfe des Unterlenkers und dem darin eingehängten Koppelelement 40 mit einfachen Mitteln möglich, die temporäre Verriegelung zwischen der Deichsel 14, dem Unterlenker und dem Koppelelement 40 herzustellen. Durch Herstellen der temporären Verriegelung wird der erste Drehpunkt 20 blockiert. Durch Lösen der Verriegelungseinrichtung 24 an dem zweiten Drehpunkt 22 ist die Deichsel 14 bzw. das Anhängegerät 12 für eine "langsame" Fahrt mit spurtreuem Nachlauf vorbereitet.

Umgekehrt können durch Betätigen des Betätigungselements 26 der Verriegelungseinrichtung 24 die Klauenelemente 25 in Eingriff mit der Deichsel 14 gebracht werden und der zweite Drehpunkt 22 kann blockiert werden. Durch Lösen des Verriegelungselements 36 und durch anschließendes Absenken des Unterlenkers gemeinsam mit dem Koppelelement 40, kann der erste Drehpunkt 20 gelöst werden und die Deichsel 14 bzw. das Anhängegerät 12 ist für eine "schnelle" Fahrt vorbereitet.

Alternativ kann, um die temporäre Verriegelung herzustellen, das Koppelement 40 dauerhaft in dem Anbauteil 32 verbleiben und es werden lediglich die Fanghaken 42 des Koppelements 40 in Eingriff mit den Fangösen des Unterlenkers 60 gebracht. Das Lösen der temporären Verriegelung erfolgt auf umgekehrte Weise.

Das Koppelelement 40 oder das Anbauteil 32 können quer zur Fahrrichtung verschiebbar ausgebildet sein. Dadurch ist ein Nachsteuern bei einer Schrägfahrt, bspw. an einem geneigten Hang möglich. Dazu kann beispielsweise ein Hydraulikzylinder zwischen Deichsel 14 und Anbauteil 32 vorgesehen sein, um das Anbauteil quer zur Fahrrichtung zu verschieben. Alternativ kann ein Hydraulikzylinder zwischen Unterlenker 60 und Koppelelement 40 vorgesehen sein, um die Querbewegung des Koppelementes umzusetzen.

Das in Fig. 3 gezeigte U-förmige Koppelelement 40 ermöglicht durch ein Verschwenken den Ausgleich von Wank- und Nickbewegungen des Zugfahrzeuges und des Anhängegeräts 12 während der Fahrt. Der Unterlenker 60 steht in Eingriff mit dem Koppelelement 40. Sowie ein Wanken oder Nicken stattfindet, wird das Wanken oder Nicken durch ein Verschwenken des Koppelelements 40 bei temporärer Verriegelung des ersten Drehpunkts 20 ausgeglichen.

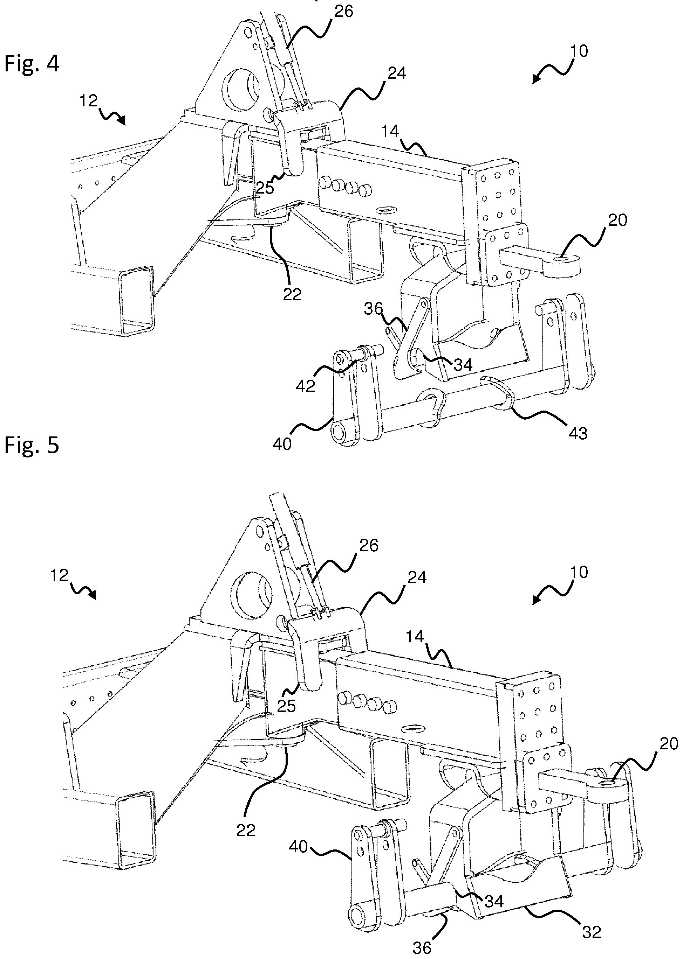

Fig. 4 und Fig. 5 stellen eine weitere erfindungsgemäße Ausführungsform dar, bei der das Koppelelement 40 im Wesentlichen länglich ausgebildet ist, wobei die Fanghaken 42 in Bezug auf das längliche Koppelelement 40 parallel versetzt angeordnet sind. Das Koppelelement 40 ist ebenfalls mit im Wesentlichen schräg angeordneten, scheibenförmigen Einrückhilfen 43 versehen. Die Fangösen (nicht gezeigt) des Unterlenkers 60 treten in Eingriff mit den Fanghaken 42, um das Koppelelement anzuheben.

Fig. 6 zeigt eine weitere alternative Ausführungsform, bei der ein Koppelelement 40 verwendet wird, das so ausgebildet ist, dass der Nickbewegungsausgleich im Vergleich zu dem in Fig. 3 gezeigten Ausführungsbeispiel weiter oben stattfindet.

Gemäß einer Alternative kann das Koppelelement auch fest mit der Deichsel verbunden sein. Die Unterlenker 60 koppeln alsdann (mit Hilfe der Fanghaken) mit dem Koppelelement.

## Patentansprüche

1. Zugvorrichtung (10), umfassend:
ein Zugfahrzeug (70), insbesondere einen Schlepper, sowie
ein Anhängegerät (12) zum Anhängen an das Zugfahrzeug (70) mittels einer Deichsel (14), wobei
das Zugfahrzeug (70) umfasst:
eine Zugeinrichtung (50), insbesondere ein Zugmaul, in das die Deichsel (14) des Anhängegeräts (12) um einen ersten Drehpunkt (20) verschwenkbar einhängbar ist, und
einen an der Rückseite des Zugfahrzeugs angeordneten, insbesondere höhenverstellbaren, Unterlenker (60),
wobei
der Unterlenker (60) dazu eingerichtet ist, um bei an die Zugeinrichtung (50) angehängter Deichsel (14) eine Verriegelung des ersten Drehpunkts (20) während eines Ziehens des Anhängegeräts zu erwirken, und wobei
der Unterlenker (60) durch Verstellung in seiner Höhe in Eingriff mit der Deichsel bringbar ist und dadurch den ersten Drehpunkt (20) verriegelt, **dadurch gekennzeichnet, dass**
an der Deichsel (14) ein in Vorwärtsfahrtrichtung in Bezug auf den ersten Drehpunkt rückwärtig angeordneter, zweiter Drehpunkt (22) vorgesehen ist.

2. Zugvorrichtung nach Anspruch 1, **dadurch gekennzeichnet, dass** die temporäre Verriegelung durch
ein in dem Unterlenker (60) eingehängtes Koppelelement (40) bewirkt wird, das in Eingriff mit einer an der Deichsel (14) vorgesehenen Ausnehmung (34) bringbar ist, und/oder
ein fest mit der Deichsel verbundenes Koppelelement bewirkt wird, das in Eingriff mit Fangösen des Unterlenkers bringbar ist.

3. Zugvorrichtung nach Anspruch 1 oder 2, **dadurch gekennzeichnet, dass** die temporäre Verriegelung eine im Wesentlichen horizontale Verriegelung, erwirkt.

4. Zugvorrichtung nach einem der vorhergehenden Ansprüche 1 bis 3, **dadurch gekennzeichnet, dass** an der Deichsel (14) eine Verriegelungseinrichtung (24) vorgesehen ist, um den in Vorwärtsfahrtrichtung rückwärtig angeordneten, zweiten Drehpunkt (22) zu blockieren.

5. Zugvorrichtung nach Anspruch 4, **dadurch gekennzeichnet, dass** die Verriegelungseinrichtung (24) hydraulisch und/oder mechanisch betätigbar ist.

6. Zugvorrichtung nach einem der vorhergehenden Ansprüche 1 bis 5, **dadurch gekennzeichnet, dass** die temporäre Verriegelung zwischen der Deichsel (14), dem Unterlenker (60) und dem Koppelelement (40) durch eine lösbare Verriegelung zwischen der Deichsel (14) und dem Koppelelement (40) bewirkt wird, wobei vorzugsweise eine Betätigung der lösbaren Verriegelung (36) hydraulisch erfolgt.

7. Zugvorrichtung nach einem der vorhergehenden Ansprüche 1 bis 6, **dadurch gekennzeichnet, dass** die Deichsel (14) und das Koppelelement (40) derart ausgebildet sind, dass eine Zapfwelle zwischen dem Anhängegerät (12) und der Zugvorrichtung (10) anordenbar ist.

8. Zugvorrichtung nach einem der vorhergehenden Ansprüche 1 bis 7, **dadurch gekennzeichnet, dass** die temporäre Verriegelung dazu eingerichtet ist, um Nickbewegungen des Zugfahrzeugs (70) auszugleichen.

9. Zugvorrichtung nach einem der vorhergehenden Ansprüche 1 bis 8, **dadurch gekennzeichnet, dass** die Befestigung eines Anbauteils (32) an der Deichsel (14) dazu ausgebildet ist, um Wankbewegungen auszugleichen.

10. Zugvorrichtung nach einem der vorhergehenden Ansprüche 1 bis 9, **dadurch gekennzeichnet, dass** die temporäre Verriegelung zwischen der Deichsel (14), dem Unterlenker (60) und dem Koppelelement (40) derart mit der Verriegelungseinrichtung (24) an dem zweiten Drehpunkt (22) in Wirkbeziehung steht, dass ein Verriegeln zwischen der Deichsel (14) und dem Unterlenker (60) ein Lösen der Verriegelung des zweiten Drehpunkts (22) und umgekehrt bewirkt.

11. Zugvorrichtung nach einem der vorhergehenden Ansprüche 1 bis 10, **dadurch gekennzeichnet, dass** das Koppelelement (40) mit der Deichsel (14) verbunden ist.

12. Zugvorrichtung nach einem der vorhergehenden Ansprüche 1 bis 11, **dadurch gekennzeichnet, dass** bei der temporären Verriegelung eine Stellung der Deichsel (14) in Fahrrichtung des Zugfahrzeugs (70) veränderbar ist.

13. Zugvorrichtung nach einem der vorhergehenden Ansprüche, **dadurch gekennzeichnet, dass** an den Enden des Koppelelements (40) jeweils ein Fanghaken (42) vorgesehen ist und zwischen den Fanghaken (42) und dem Koppelelement (40) eine Überlastsicherung vorgesehen ist, die vorzugsweise dazu ausgelegt ist, zu verhindern, dass durch die hydraulische Kraft der Unterlenker (60) während des Koppelvorgangs eine Überlastung der Anhängevorrichtung und/oder eines Niederhalters an der Zugeinrichtung (50) eintritt.

## Claims

1. Towing apparatus (10), comprising:
a towing vehicle (70), particularly a tractor, and
a trailer device (12) for attaching to the towing vehicle (70) by way of a tow bar (14),
the towing vehicle (70) comprising:
a towing mechanism (50), in particular a hitch, into which the tow bar (14) of the trailer device (12) can be clipped so as to be pivotable around a first pivot point (20), and
a lower link arm (60), particularly a height-adjustable lower link arm, arranged at the rear of the towing vehicle,
the lower link arm (60) being set up such that, when the tow bar (14) is attached to the towing mechanism (50), the lower link arm brings about an interlock of the first pivot point (20) while the trailer device is being towed, and
the lower link arm (60) being able to be brought into engagement with the tow bar by adjusting its height, so as to interlock the first pivot point (20),
**characterized in that**
a second pivot point (22) arranged at the rear in relation to the first pivot point in a forward direction of travel is provided on the tow bar (14).

2. Towing apparatus according to claim 1, **characterized in that** the temporary interlock is brought about by a coupling element (40), which is clipped into the lower link arm (60) and can be brought into engagement with a recess (34) provided on the tow bar (14), and/or
is brought about by a coupling element which is fixedly connected to the tow bar and can be brought into engagement with catch eyelets of the lower link arm.

3. Towing apparatus according to claim 1 or 2, **characterized in that** the temporary interlock brings about a substantially horizontal interlock.

4. Towing apparatus according to one of the preceding claims 1 to 3,
**characterized in that** an interlock device (24) is provided on the tow bar (14) to block the second pivot point (22) that is arranged at the rear in a forward direction of travel.

5. Towing apparatus according to claim 4, **characterized in that** the interlock device (24) is hydraulically and/or mechanically actuatable.

6. Towing apparatus according to one of the preceding claims 1 to 5,
**characterized in that** the temporary interlock between the tow bar (14), the lower link arm (60) and the coupling element (40) is brought about by a releasable interlock between the tow bar (14) and the coupling element (40), the releasable interlock (36) preferably being actuated by hydraulic means.

7. Towing apparatus according to one of the preceding claims 1 to 6,
**characterized in that** the tow bar (14) and the coupling element (40) are designed in such a way that a power take-off shaft can be arranged between the trailer device (12) and the towing apparatus (10).

8. Towing apparatus according to one of the preceding claims 1 to 7,
**characterized in that** the temporary interlock is set up to compensate for pitching movements of the towing vehicle (70).

9. Towing apparatus according to one of the preceding claims 1 to 8,
**characterized in that** the mounting of an attachment (32) on the tow bar (14) is designed to compensate for rolling movements.

10. Towing apparatus according to one of the preceding claims 1 to 9,
**characterized in that** the temporary interlock between the tow bar (14), the lower link arm (60) and the coupling element (40) is in operative relationship with the interlock device (24) on the second pivot point (22) such that an interlock between the tow bar (14) and the lower link arm (60) releases the interlock of the second pivot point (22) and vice versa.

11. Towing apparatus according to one of the preceding claims 1 to 10,
**characterized in that** the coupling element (40) is connected to the tow bar (14).

12. Towing apparatus according to one of the preceding claims 1 to 11,
**characterized in that** the temporary interlock allows a position of the tow bar (14) in the direction of travel of the towing vehicle (70) to be altered.

13. Towing apparatus according to one of the preceding claims, **characterized in that** a catch hook (42) is provided at each end of the coupling element (40), and between the catch hooks (42) and the coupling element (40) provision is made for an overload protection mechanism, which is preferably designed to prevent an overload of the trailer device and/or of a hold-down device on the towing mechanism (50) due to the hydraulic force of the lower link arm (60) during the coupling operation.

## Revendications

1. Dispositif de traction (10) comprenant :
un véhicule de traction (70), en particulier un tracteur, ainsi qu'un appareil d'attelage (12) destiné à être attelé au véhicule de traction (70) au moyen d'un timon (14), dans lequel
le véhicule de traction (70) comprend :
un système de traction (50), en particulier une mâchoire de traction, dans laquelle le timon (14) de l'appareil d'attelage (12) peut être accroché de manière à pouvoir pivoter autour d'un premier point de rotation (20), et
un bras inférieur (60) disposé sur le côté arrière du véhicule de traction, en particulier ajustable en hauteur,
dans lequel le bras inférieur (60) est mis au point pour entraîner, lorsque le timon (14) est attaché au système de traction (50), un verrouillage du premier point de rotation (20) au cours d'une traction de l'appareil d'attelage, et dans lequel
le bras inférieur (60) peut être amené en prise avec le timon en ajustant sa hauteur tout en verrouillant ainsi le premier point de rotation (20), **caractérisé en ce que**
un deuxième point de rotation (22) disposé à l'arrière par rapport au premier point de rotation dans la direction d'avancement est prévu sur le timon (14).

2. Dispositif de traction selon la revendication 1, **caractérisé en ce que** le verrouillage temporaire
est provoqué par un élément de couplage (40) accroché dans le bras inférieur (60), qui peut être amené en prise avec un évidement (34) prévu sur le timon (14), et/ou
est provoqué par un élément de couplage relié de manière solidaire au timon, lequel peut être amené en prise avec des oeillets d'arrêt du bras inférieur.

3. Dispositif de traction selon la revendication 1 ou 2, **caractérisé en ce que** le verrouillage temporaire entraîne un verrouillage sensiblement horizontal.

4. Dispositif de traction selon l'une quelconque des revendications précédentes 1 à 3, **caractérisé en ce qu'**un système de verrouillage (24) est prévu sur le timon (14) pour bloquer le deuxième point de rotation (22) disposé à l'arrière dans la direction d'avancement.

5. Dispositif de traction selon la revendication 4, **caractérisé en ce que** le système de verrouillage (24) peut être actionné de manière hydraulique et/ou de manière mécanique.

6. Dispositif de traction selon l'une quelconque des revendications précédentes 1 à 5, **caractérisé en ce que** le verrouillage temporaire est provoqué entre le timon (14), le bras inférieur (60) et l'élément de couplage (40) par un verrouillage amovible entre le timon (14) et l'élément de couplage (40), dans lequel de préférence un actionnement du verrouillage (36) amovible est effectué de manière hydraulique.

7. Dispositif de traction selon l'une quelconque des revendications précédentes 1 à 6, **caractérisé en ce que** le timon (14) et l'élément de couplage (40) sont réalisés de telle manière qu'un arbre de prise de force peut être disposé entre l'appareil d'attelage (12) et le dispositif de traction (10).

8. Dispositif de traction selon l'une quelconque des revendications précédentes 1 à 7, **caractérisé en ce que** le verrouillage temporaire est mis au point pour compenser des mouvements de tangage du véhicule de traction (70).

9. Dispositif de traction selon l'une quelconque des revendications précédentes 1 à 8, **caractérisé en ce que** la fixation d'un composant rapporté (32) sur le timon (14) est réalisée de manière à compenser des mouvements de roulis.

10. Dispositif de traction selon l'une quelconque des revendications précédentes 1 à 9, **caractérisé en ce que** le verrouillage temporaire entre le timon (14), le bras inférieur (60) et l'élément de couplage (40) coopère de telle manière avec le système de verrouillage (24) sur le deuxième point de rotation (22) qu'un verrouillage entre le timon (14) et le bras inférieur (60) provoque un desserrage du verrouillage du deuxième point de rotation (22) et inversement.

11. Dispositif de traction selon l'une quelconque des revendications précédentes 1 à 10, **caractérisé en ce que** l'élément de couplage (40) est relié au timon (14).

12. Dispositif de traction selon l'une quelconque des revendications précédentes 1 à 11, **caractérisé en ce qu'**une position du timon (14) peut être modifiée dans la direction de déplacement du véhicule de traction (70) lors du verrouillage temporaire.

13. Dispositif de traction selon l'une quelconque des revendications précédentes, **caractérisé en ce que** respectivement un crochet d'arrêt (42) est prévu sur les extrémités de l'élément de couplage (40) et un système de sécurité anti-surcharge est prévu entre le crochet d'arrêt (42) et l'élément de couplage (40), lequel est configuré de préférence pour empêcher qu'une surcharge du dispositif d'attelage et/ou d'un système de retenue n'apparaisse sur le système de traction (50) du fait de la force hydraulique des bras inférieurs (60) pendant l'opération de couplage.
